# EUROPEAN PATENT APPLICATION

(11) **EP 3 135 877 A1**
(43) Date of publication of application: **01.03.2017**
(21) Application number: 16183746.3
(22) Date of filing: 11.08.2016
(51) Int. Cl.: F01N 3/20, F02C 1/00, B01D 53/86, F02C 3/30, F01D 25/30

(54) **METHODS AND SYSTEMS RELATED TO SELECTIVE CATALYTIC REDUCTION**

(30) Priority: 28.08.2015 US 201514838804
(71) Applicant: General Electric Company, Schenectady, NY 12345 (US)
(72) Inventor: ZHANG, Hua, Greenville, SC South Carolina 29615 (US); SMITH, Gordon Raymond, Schenectady, NY New York 12345 (US); KULKARNI, Parag Prakash, Schenectady, NY New York 12345 (US)
(74) Representative: Lee, Brenda

(57) **Abstract**

An exhaust processing system (14) for treating an exhaust gas stream that includes an exhaust duct (29) for directing the exhaust gas stream; a first catalyst (48) positioned within the exhaust duct (29) for receiving the exhaust gas stream flowing therethrough; and an injection system (72) for injecting cooling air and reductant in the exhaust gas stream. The injection system (72) may include: a reductant supply feed 49 for supplying the reductant; a cooling air supply feed 66 for supplying the cooling air; a junction (74) configured at which the reductant supply feed (49) and the cooling air supply feed (66) combine to form a combined supply feed (76) thereafter; and an injector (73) disposed within the exhaust duct (29) to which the combined supply feed (76) connects.

## Description

The present invention relates to the reduction of nitrogen oxides (NOx) in combustion exhaust gases and more particularly to the reduction of NOx in the exhaust gases of industrial gas turbines using Selective Catalytic Reductions (SCR) systems and processes.

In the operation of gas turbine combustors, nitrogenous compounds in both the fuel used and from atmospheric nitrogen fixation during combustion lead to the presence of NOx in the combustor exhaust gas (also called the flue gas). With regulations on NOx control becoming more stringent around the world, it is important for combustion turbines to minimize NOx emissions.

One solution for reducing NOx emissions is the SCR system, which adds a reductant, typically ammonia or urea, to the exhaust gas stream before passing it through a catalytic bed that selectively adsorbs nitrogen oxides and the reducing agent. The adsorbed components undergo a chemical reaction on the catalyst surface and the reaction products are desorbed. NOx reduction using ammonia typically occurs through the following stoichiometric reactions:

4NO+4NH₃+O₂→4N₂+6H₂O

2NO₂+4NH₃+O₂→3N₂+6H₂O

NO+NO₂+2NH₃→2N₂+3H₂O

For SCR systems, the reactivity of the catalyst is dependent upon the flue gas temperature entering the catalyst reactor. The flue gas temperature at the exit of the gas turbine is typically above about 1200° F, while SCR systems are generally designed to operate efficiently at much lower temperatures, for example, between about 600° to about 900° F. When the flue gas temperature at the exit of the gas turbine falls outside of the designed temperature range, the SCR catalytic conversion efficiency drops. Consequently, more ammonia or catalyst volume may be needed to maintain the conversion rate of the NOx, resulting in higher costs. In most cases, high temperature causes the catalyst to lose catalytic activity, and, therefore, to not function properly.

Two designs have been popular for cooling the exhaust gas to within the operating temperature range of the SCR. One such design cools the flue gas using a heat exchanger in the exhaust conduit, a representative example of which is described in U.S. Pat. No. 4,353,207. The heat exchanger reduces the temperature of the exhaust gas to within the reaction range by extracting heat, which is then used to produce steam for application elsewhere in the gas turbine. This type of arrangement is acceptable for combined cycle gas turbines used for base load operations, but is less applicable for simple cycle gas turbines typically used in peak load operations where space and cost are more restrictive.

Another design, applicable to both simple and combined cycle turbines, is to cool the exhaust gas by mixing it with ambient air. Using air-fans and injection openings, ambient air is blown into the exhaust gas conduit against the backpressure created by the exhaust gas flow. To reduce the temperature of the exhaust gas to within the reaction range, the quantity of air required is typically about 20% to 40% of the exhaust gas volume. The significant volume of coolant increases installation and operational costs while reducing turbine efficiency due to a greater pressure drop across the system. Poor mixing between the high-volume air and the exhaust gas can also cause a non-uniform temperature distribution across the catalyst bed, thus reducing overall catalytic activity. Additionally, the air flow rate may require wide-range adjustments to accommodate changing ambient conditions and exhaust gas temperatures, leading to significant operational variances. The distribution of reductant, such as ammonia, may also be nonuniform, as well as necessitating a separate system for its injection. As will be appreciated, reducing these variances so to enhance the operation of SCR systems requires complex mixing systems and/or lengthening of the exhaust duct so to provide more time for the exhaust gases, the cooling air, and the reductant to mix properly, which results in increased plant costs, including both installation and operational expenses.

Thus there exists a need for more efficient exhaust treatment systems for cooling and injecting reductant into an exhaust gas stream of combustion engines.

The present invention thus describes an exhaust processing system for treating an exhaust gas stream. The exhaust processing system may include: an exhaust duct for directing the exhaust gas stream; a first catalyst positioned within the exhaust duct for receiving the exhaust gas stream flowing therethrough; and an injection system for injecting cooling air and reductant in the exhaust gas stream. The injection system may include: a reductant supply feed for supplying the reductant; a cooling air supply feed for supplying the cooling air; a junction configured at which the reductant supply feed and the cooling air supply feed combine to form a combined supply feed thereafter; and an injector disposed within the exhaust duct to which the combined supply feed connects.

The present application may further include a method for reducing nitrogen oxides within an exhaust gas stream of a combustion turbine engine. The method may include the steps of: directing the exhaust gas stream through an exhaust duct; receiving the exhaust gas stream with a SCR catalyst disposed within the exhaust duct; directing cooling air through a cooling air supply feed; directing reductant through a reductant supply feed; combining the cooling air from the cooling air supply feed and the reductant from the reductant supply feed at a junction and directing the combined flow thereof through a combined supply feed to an injector positioned within the exhaust duct; and injecting via the injector the cooling air and the reductant of the combined supply feed into the exhaust duct. The cooling air may include a supply sufficient to significantly reduce the temperature of the combustion exhaust gas stream before the combustion exhaust stream is received by the SCR catalyst. Further, the junction may be positioned outside of the exhaust duct.

Various features, aspects, and advantages of the present invention will become better understood when the following detailed description is read with reference to the accompanying drawings in which like characters represent like parts throughout the drawings, wherein:
Figure 1 is a block diagram of a gas turbine system having an air injection and SCR system in accordance with aspects of the present invention and/or presents an exemplary environment in which the present invention may operate;
Figure 2 is a sectional side view of an exhaust duct that includes an air injection system having a plurality of air injection tubes in accordance with exemplary embodiments of the present invention;
Figure 3 is a perspective partial cutaway view illustrating certain aspects of the transition section of Figure 2;
Figure 4 illustrates a schematic side view of a gas turbine system having an air injection and SCR system in accordance with certain aspects of the present invention and/or presenting exemplary environments in which the present invention may operate;
Figure 5 illustrates a schematic top view illustrating certain aspects of the system of Figure 4;
Figure 6 illustrates a schematic side view of a gas turbine system having an air injection and SCR system in accordance with an exemplary embodiment of the present invention; and
Figure 7 illustrates a schematic side view of a gas turbine system having an air injection and SCR system in accordance with an alternative embodiment of the present invention.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. Additionally, it should be understood that references to "one embodiment" or "an embodiment" of the present invention are not intended to be interpreted as excluding the existence of additional embodiments that also incorporate the recited features.

Embodiments of the present invention generally relate to techniques for cooling or tempering an exhaust gas flow. For instance, in gas turbine systems, one or more gas turbine engines may combust a fuel to produce combustion gases for driving one or more turbine blades. Depending on the type of fuel that is combusted, emissions (e.g., exhaust gases) resulting from the combustion process may include nitrogen oxides (NOx), sulfur oxides (SOx), carbon oxides (COx), and unburned hydrocarbons. Often, the composition of exhaust gases released by gas turbine systems, such as a gas turbine power generation plant, is subject to stringent regulatory requirements. By way of example only, regulations may require that the NOx composition of the exhaust gas that is released into the atmosphere is no greater than 3 parts-per-million (ppm).

As mention above, one technique for removing or reducing the amount of NOx in an exhaust gas stream is by Selective Catalytic Reduction (SCR). In an SCR process, a reductant, such as ammonia (NH₃), is injected into the exhaust gas stream and reacts with the NOx to produce nitrogen (N₂) and water (H₂O) on the surface of catalysts. The effectiveness of the SCR process may be at least partially dependent upon the temperature of the exhaust gas that is processed. For instance, the SCR process for removing NOx may be particularly effective at temperatures of approximately 700 to 900° F. Thus, where the exhaust gas output from the turbine engine is higher than the effective temperature range for SCR, it may be beneficial to cool the exhaust gases prior to SCR in order to increase the effectiveness of the SCR process (e.g., removal of NOx) in order to meet regulatory standards.

As such, in accordance with embodiments of the present invention, a gas turbine system, such as a simple cycle heavy-duty gas turbine system, may include injection systems configured for injecting cooling air and reductant into an exhaust gas stream. As will be described further below, the air injection system may be disposed downstream (i.e., relative to the flow of exhaust gases) of a turbine, but upstream from an SCR system, and/or may be incorporated or combined therewith. The air injection system may include an air injector having a plurality of injection tubes, each having a plurality of outlets for injecting cooling air into the exhaust gas stream. Additionally, the cooling air could be supplied from the compressor. Regardless of the cooling air source, it should be understood that the cooling air may be ambient air, or may be cooled, i.e., via a heat exchanger, prior to injection into the transition section. Depending on the particular desired profile of the exhaust gas, the air injection tubes may be of varying sizes, and may be arranged in a staggered configuration. In accordance with these presently disclosed techniques, the injection of cooling air into the exhaust gas stream by the air injection system may provide for improved uniformity in temperature and/or velocity distributions of the cooled exhaust gas received by the SCR system, reduced gas turbine backpressure, and enhanced flow distribution, among other advantages. Further, while the presently disclosed techniques may be particularly useful in simple cycle heavy-duty gas turbine systems, as will be discussed below, it should be understood that the present technique may be implemented in any suitably configured system, including combined cycle gas turbine systems, for example. The present invention may further include the incorporation of the ammonia injector and the air injection system for more efficient overall system operation.

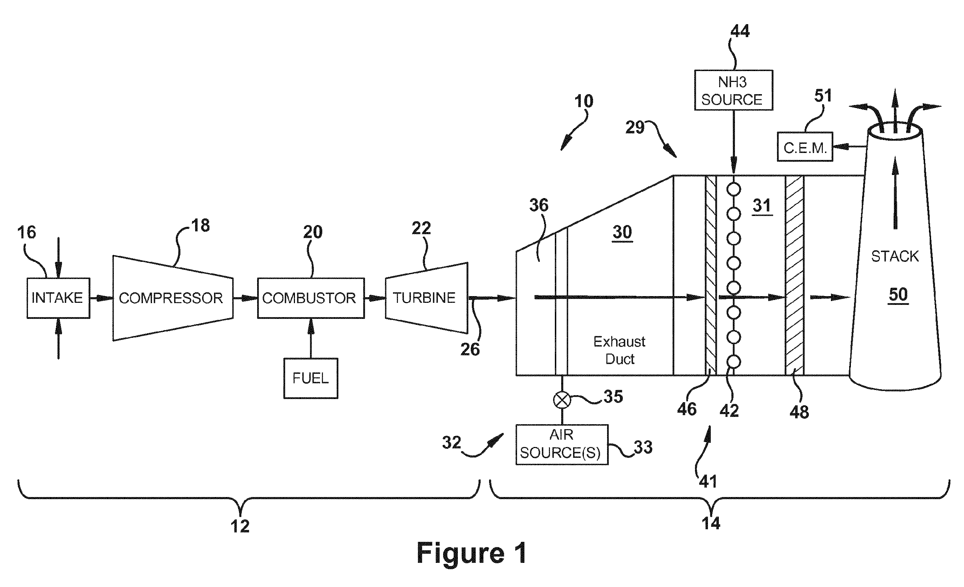

With the foregoing in mind, Figure 1 is a block diagram of an exemplary turbine system 10 that includes a gas turbine engine 12 and an exhaust processing system 14. In certain embodiments, the turbine system 10 may be a power generation system. As shown, the gas turbine engine 12 includes an air intake section 16, a compressor 18, a combustor section 20, and a turbine 22. The turbine 20 may be drivingly coupled to the compressor 18 via a shaft. In operation, air enters the turbine engine 12 through the air intake section 16 (indicated by the arrows) and is pressurized in the compressor 18. The compressor 18 may include a plurality of compressor blades coupled to the shaft. The rotation of the shaft causes rotation of the compressor blades, thereby drawing air into the compressor 18 and compressing the air prior to entry into the combustor section 20.

The combustor section 20 may include one or more combustors. As compressed air exits the compressor 18 and enters the combustor section 20, the compressed air may be mixed with fuel for combustion within the combustors. The combustor may include one or more fuel nozzles that inject a fuel-air mixture into the combustors in a suitable ratio for optimal combustion, emissions, fuel consumption, power output, and so forth. The combustion of the air and fuel may generate hot pressurized gases, which may then be utilized to drive one or more turbine blades within the turbine 22. In operation, the combustion gases flowing into and through the turbine 22 flow against and between the turbine blades, thereby driving the turbine blades and, thus, the shaft into rotation to drive a load, such as an electrical generator in a power plant. As discussed above, the rotation of the shaft also causes blades within the compressor 18 to draw in and pressurize the air received by the intake 16.

The combustion gases that flow through the turbine 22 may exit the downstream end of the turbine 22 as a stream of exhaust gases 26. The exhaust gas stream 26 may continue to flow in the downstream direction towards the exhaust processing system 14. For instance, the downstream end may be fluidly coupled to the exhaust processing system 14 and, particularly, to an exhaust duct 29. The exhaust duct 29 may include an upstream section, which will be referred to herein as a transition section 30, as well as a downstream section 31. As will be appreciated, the transition section 30 is so-called because it is configured so to transition the cross-sectional flow area through the exhaust duct 29 from a smaller area near the turbine 22 to a larger flow area extending through the downstream section 31 of the exhaust duct 29. The downstream section 31 may extend between the transition section 30 and a stack 50, where the exhaust gases are emitted to atmosphere. As discussed above, as a result of the combustion process, the exhaust gas stream 26 may include certain byproducts, such as nitrogen oxides (NOx), sulfur oxides (SOx), carbon oxides (COx), and unburned hydrocarbons. Due to certain regulatory requirements, the exhaust processing system 14 may be employed to reduce or substantially minimize the concentration of such byproducts prior to releasing the exhaust gas stream into the atmosphere.

One technique for removing or reducing the amount of NOx in an exhaust gas stream is by using a Selective Catalytic Reduction (SCR) process. For example, in an SCR process for removing NOx from the exhaust gas stream 26, ammonia (NH₃) is injected into the exhaust gas stream and reacts with the NOx to produce nitrogen (N₂) and water (H₂O). As will be appreciated, the effectiveness of this SCR process may be at least partially dependent upon the temperature of the exhaust gas that is processed. For instance, the SCR process for removing NOx may be particularly effective at temperatures of approximately 700 to 900° F. However, the exhaust gas stream 26 exiting the turbine 22 and entering the transition section 30 have much higher temperatures. Accordingly, to increase the effectiveness of the SCR process for NOx removal, the exhaust processing system 14 may include an air injection system 32 configured to inject cooling air into the exhaust gas stream 26, thereby cooling the exhaust gas stream 26 prior to SCR. It should be understood that the effective temperatures may vary depending on the element being removed from the gas stream and/or the catalyst being employed.

As shown in Figure 1, the air injection system 32 may be disposed within the transition section 30. The air injection system 32 may include one or more air injectors 36 that are configured for injecting cooling air provided by an air source 33 into the transition section 30 for mixture with the exhaust gas stream 26. As discussed more below, the air source 33 may include one or more air blowers, compressors, heat exchangers, or a combination thereof. As will be appreciated, the term "cooling," when used to describe the air flow, should be understood to mean that the air is cooler relative to the exhaust gas stream 26 exiting the turbine 22. For example, the cooling air supplied by the air source 33 may be ambient air, or may be further cooled using a heat exchanger or other type of suitable cooling mechanism. The air injection system 32 may also include a valve 35 for regulating the flow of cooling air. By way of example only, in one embodiment, the exhaust gas stream 26 output from the turbine 22 may flow into the transition section 30 at a rate of approximately 1000 pounds/second, and cooling air may be injected into the transition section 30 (via the air injection system 32) at a rate of approximately 400 pounds/second. It should be understood, however, that the flow rate of exhaust gas stream 26 and the flow rate of the cooling air may vary. The cooling air mixes with the exhaust gas stream 26 in order to achieve a cooled exhaust gas stream, which as discussed above, may have a temperature of approximately 700 to 900 degrees °F, i.e., suitable for increasing or substantially maximizing NOx removal in the SCR process. As will be discussed further below, the configuration of the air injector 36 may be suitably configured to provide generally uniform mixing, thus achieving a generally uniform temperature and velocity distribution in the cooled exhausted gas prior to downstream SCR processing.

From the air injection system 32, the cooled exhaust gas stream may continue flowing downstream and through an SCR system 41. As illustrated, the SCR system 41 may include an ammonia injector 42 for injecting an ammonia supply 44 into the exhaust gas stream 26. As described in more detail below, the SCR system 41 may further include an upstream or CO catalyst 46 and/or a downstream or SCR catalyst 48 that promotes the reaction of the ammonia reductant and the NOx in the exhaust gas stream to produce nitrogen (N₂) and water (H₂O), thus removing NOx from the exhaust gas prior to release into the atmosphere through the stack 50. The stack 50, in some embodiments, may include a silencer or muffler. By way of example and depending on current regulatory standards, the exhaust processing system 14 may utilize the air injection system 32 and the SCR system 41 to reduce the composition of NOx in the processed exhaust gas stream to approximately 3 ppm or less. In another embodiment, atomized water may be mixed with cooling air, and the water-air mixture may be injected into the transition section 30 to lower exhaust gas temperature.

While the present embodiment is generally focused on the processing and removal of NOx from the exhaust gas stream 26, other embodiments may provide for the removal of other combustion byproducts, such as carbon monoxide or unburned hydrocarbons. As such, the supplied catalyst may vary depending on the composition that is being removed from the exhaust gas stream 26. Additionally, it should be understood that the embodiments disclosed herein are not limited to the use of one SCR system 41, but may also include multiple SCR systems 41. Still further, the system 10 may also include a continuous emissions monitoring (CEM) system 51 that continuously monitors the composition of the processed exhaust stream exiting the stack 50. If the CEM system 51 detects that the composition of processed exhaust stream fails to comply with one or more regulatory requirements, the CEM system 51 may provide notification to an appropriate regulatory entity (e.g., Environmental Protection Agency), which may be tasked with instigating further action, such as notifying the operators of the system 10 to adjust operating parameters, perform service, or otherwise cease operating the system 10 until it can be determined that the processed exhaust stream produced by the system 10 conforms with the regulatory requirements. In some embodiments, the CEM system 51 may also implement corrective actions, such as adjusting temperature, flow rates of cooling air, an amount of NH₃ injected into duct 29, etc.

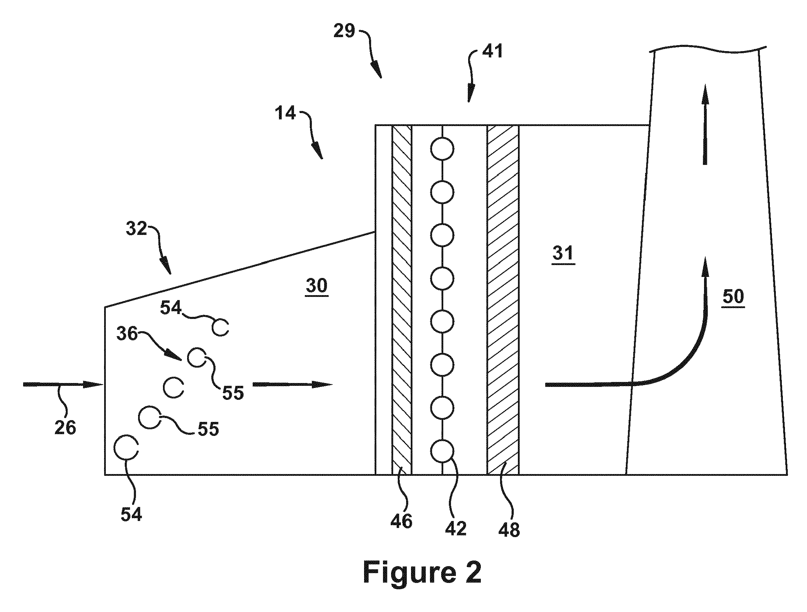

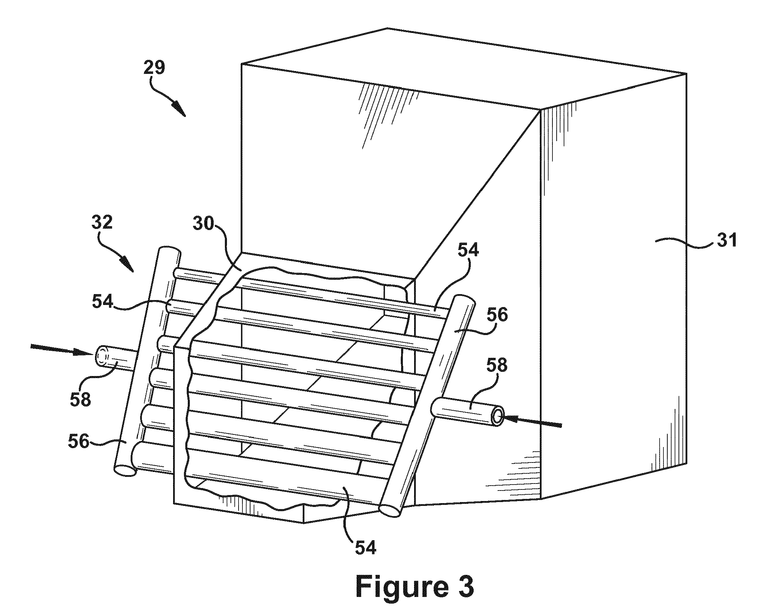

Referring now to Figures 2 and 3, an exemplary air injection system 32 is provided which is in accordance with certain aspects of the present invention. Though other configurations are also possible, the air injector 36 of the air injection system 32 may include a plurality of air injection tubes 54 arranged in a staggered configuration (e.g., progressively different vertical and horizontal positions). The air injection tubes 54 may be configured to receive a flow of cooling air and to inject the cooling air into the transition section 30 for mixture with the exhaust gas stream 26. As shown in Figure 2, each of the injection tubes 54 may include an arrangement of air injection outlets 55. As shown in Figure 3, an air injection manifold 58 may be coupled to the ends of the air injection tubes 54. Via inlets 58 formed at the ends of the air injection tubes 54, the air injection manifold 56 may be fluidly coupled an air source 33 to each of the injection tubes 54. As discussed above, the cooling air may be provided as ambient air (e.g., by an air blower or compressor), or may be cooled via, for example, a heat exchanger. Accordingly, the manifold 56 may be configured to receive the cooling air and distribute it to each of the air injection tubes 54. The cooling air may then be injected into the transition section 30 for mixture with the exhaust gas stream 26 via air injection outlets 55 that are formed on each of the injection tubes 54.

According to exemplary embodiments, the size and spacing of the air injection outlets 55 on each of the injection tubes 54 may be configured to provide for generally uniform temperature and/or velocity distributions of the cooled exhaust gas. For instance, the air injection outlets 55 may be the same size and/or may be evenly distributed across the length of the air injection tubes 54, or may also vary in size and/or distribution to address non-uniformity in the flow existing upstream of the cool air injection.

Additionally, the size (e.g., diameter) and/or length of the air injection tubes 54 themselves may vary or be the same. In doing so, flow distribution may be improved within the transition section 30 and/or downstream section 31 of the exhaust duct 29, thus reducing backpressure in the gas turbine system 10. While the presently illustrated air injection system 32 is shown as having six air injection tubes 54, it should be appreciated that in other embodiments, the air injection system 32 may have fewer or more tubes.

The transition section 30, as mentioned, generally expands in the downstream direction. For instance, the upstream end of the transition section 30 may have a height of between approximately 10 to 20 feet or, more specifically, approximately 12 to 18 feet, or even more specifically, approximately 14 to 15 feet. An opposite downstream end of the transition section 30 may have a height 65 of between approximately 25 to 100 feet or, more specifically, 25 to 60 feet. As discussed above, the air injection tubes 54 may be arranged (e.g., coupled to the manifold 56) in a staggered configuration. For instance, the air injection tubes 54 may be arranged such that each tube is offset in a length-wise direction and a height-wise relative to the exhaust duct 29 with respect to the other tube. Also, the spacing between each of the tubes 54 could be equal or different, i.e., could get spaced progressively further apart. As discussed above, each of the air injection tubes 54 may include a plurality of injection outlets 55. As will be appreciated the outlets 55 may be arranged on a downstream-facing side of the air injection tubes 54. The air injection outlets 55 may be configured to inject the cooling air received by each of the air injection tubes 54 into the transition section 30 for mixture with the exhaust gas stream 26 to produce the cooled and uniform exhaust gas stream.

Subsequent to the air injection system 32, the SCR system 41 may be configured to reduce the composition of NOx in the exhaust gas stream via selective catalyst reduction, thereby reducing the amount of NOx in the processed exhaust gas stream that exits the stack 50. The SCR system 41 may include an ammonia injector 42 for injecting an ammonia supply 44 into the cooled exhaust gas stream, as well as an upstream catalyst, which may be a CO catalyst 46, and a downstream catalyst 48, which may include an SCR catalyst, as described in more detail below.

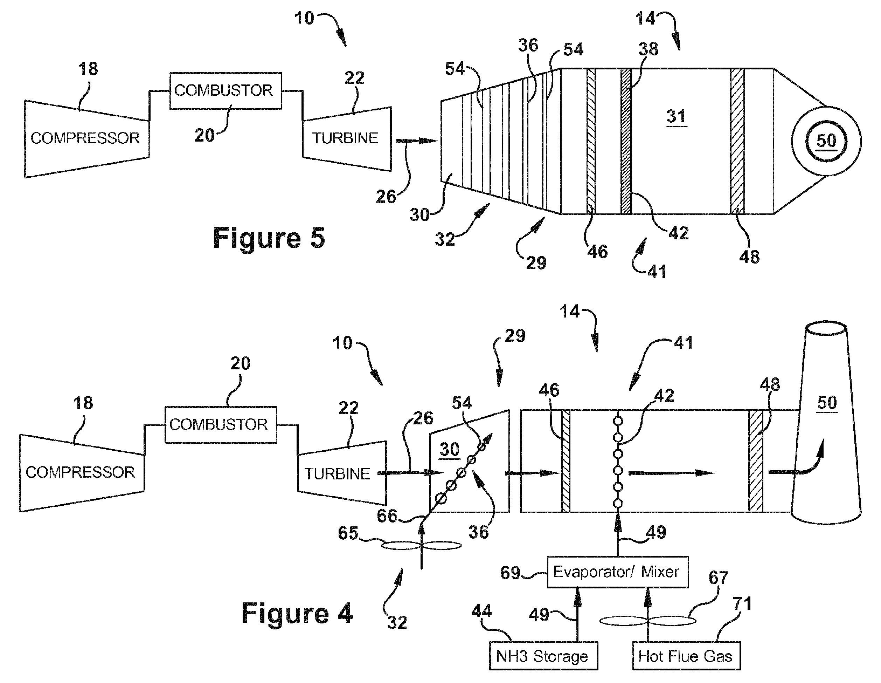

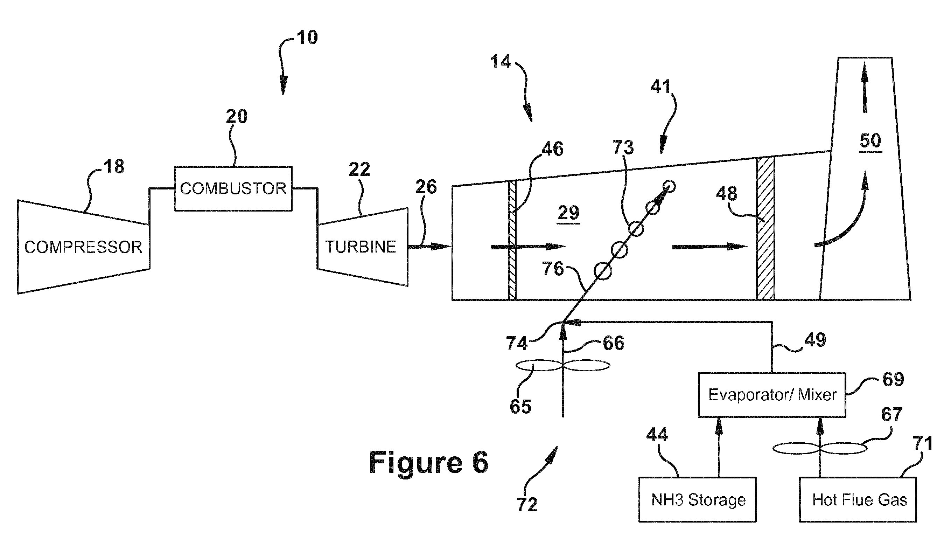

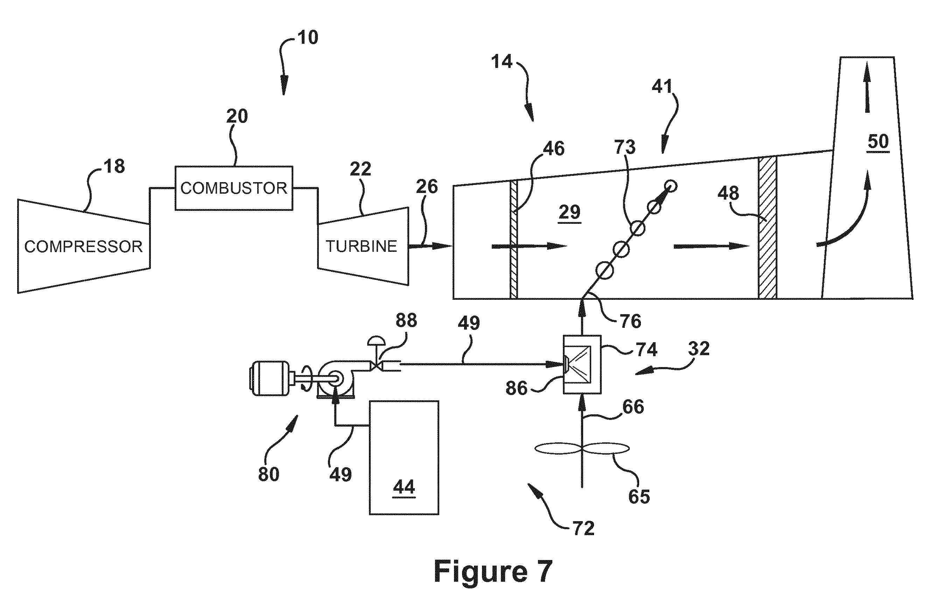

Referring now to Figures 4 and 5, views are provided of a gas turbine system 10 having an exhaust processing system 14 in accordance with certain aspects of the present invention and/or presents an exemplary environment in which further aspects the present invention, as described below, may be used. As will be appreciated, the figures that follow (i.e., Figures 6 and 7) include similarly depicted systems and include several common components as those presented and discussed in relation to Figures 4 and 5. Unless otherwise stated, the following description is also applicable to Figures 6 through 7. As illustrated, combustion gases exit the downstream end of the turbine 22 and are directed into the exhaust duct 29 of the exhaust processing system 14. The exhaust duct 29 may include a transition section 30 that connects to a downstream section 31. The downstream section 31 may then connect to a stack 50 through which exhaust gases are emitted to atmosphere. According to certain aspects of the present invention, as will be appreciated, other configurations of the exhaust duct 29 and stack 50 are also possible. As described above, the exhaust processing system 14 may include an air injection system 32 configured to inject cooling air into the exhaust gas stream 26, which functions to cool the exhaust gas stream 26 prior to SCR system 41. According to an exemplary embodiment, the air injection system 32 may include a cooling air fan 65 for supplying cooling air, which may be ambient air, to one or more air injectors 36 positioned within the transition section 30. A cooling air supply feed 66 may direct the cooling air to the air injectors 36 from the cooling air fan 65. The air injector 36, as described above, may include several injection tubes 54. The cooling air fan 65 may be a conventional pump or compressor. As provided in Figure 1, a valve may be included for regulating the flow of cooling air from the cooling air fan 65 to the air injector 36.

From the air injection system 32, the cooled exhaust gas stream may continue downstream and through an SCR system 41 for processing. The SCR system 41 may include the ammonia injector 42 configured to inject a supply of ammonia 44 into the cooled exhaust gas stream. The ammonia injector 42 may include a network of pipes with outlets for injecting ammonia 44 into the exhaust gas stream. According to one exemplary embodiment, the SCR system 41 includes an ammonia injector 42 positioned in the exhaust duct 29. As illustrated, according to certain variants, the ammonia injector 42 may be positioned in the downstream section 31 of the exhaust duct 29. The SCR system 41 may include an upstream or CO catalyst 46 and a SCR catalyst, which may be referred to herein as a downstream catalyst 48.

In the direction of flow, the exhaust gas stream may first pass through the upstream CO catalyst 46, which, as will be appreciated, may consist of a pre-oxidation catalyst. As will be understood, the pre-oxidation catalyst may treat unburned hydrocarbons and CO. The downstream catalyst 48 may include the SCR catalyst, which, for example, may be platinum, Tungsten, vanadium, or zeolite, though other types are also possible. As will be appreciated, the SCR catalyst promotes the reaction of NH₃ with NOx to form nitrogen and water, thereby reducing NOx in the exhaust flow. According to an alternative embodiment, a hydrolysis catalyst (not shown) may be included. The hydrolysis catalyst may be located upstream of the downstream catalyst 48. As will be appreciated, the hydrolysis catalyst may be used to promote the reaction of urea with water to form ammonia and carbon dioxide, thereby helping to assure the availability of ammonia in the exhaust gas stream prior to entering the downstream SCR catalyst. According to another alternative, an oxidation catalyst (not shown) may be located downstream of the downstream catalyst 48. As will be appreciated, the oxidation catalyst may be used to promote the breakdown of excess ammonia that does not react in the downstream SCR catalyst. In other words, the oxidation catalyst may promote the oxidation of excess ammonia, thereby limiting the release of ammonia from the SCR system. Thus, as will be appreciated, the nozzles of the ammonia injector 42 may be located upstream of the downstream catalyst 48, the hydrolysis catalyst (if present), and the oxidation catalyst (if present), and located downstream of the pre-oxidation catalyst (if present).

The ammonia injector 42, as illustrated in Figure 4, may connect to a ammonia supply feed 49 for delivering NH₃ for injection into the flow through exhaust duct 29. The ammonia supply feed 49 may connect to an ammonia supply 44, which may include a local storage tank or other source. The ammonia supply feed 49 may be configured to direct a supply of aqueous NH₃ solution to one or more nozzles of the ammonia injector 42 disposed within the exhaust duct 29 for injection into and mixing with the exhaust gas stream 26 moving therethrough. Such nozzles may include multiple outlet ports. To promote an even application and mixing, the outlet ports of the nozzle may be spaced about a cross-section of the exhaust duct 29 in an array.

According to further aspects of the present invention and as illustrated in Figure 4, the ammonia supply feed 49 of the ammonia injector 42 may include an evaporator-mixer component 69. The evaporator-mixer component 69 may include a heater, a flow controller, and/or a pressurizer that are configured to promote the proper delivery and mixing of the ammonia upon injection into the exhaust gas stream 26. According to an exemplary embodiment, the flow controller of the evaporator-mixer component 69 may include a valve, such as a solenoid valve, and may variably control the amount of liquid aqueous NH₃ solution flowing to the ammonia injector 42. The heater of the evaporator/mixer component 69, for example, may include any type of conventional heater or heat source, and may be configured to increase the temperature of the aqueous NH₃ moving through the ammonia supply feed 49. According to a preferred embodiment, the heater of the evaporator-mixer component 69, as illustrated, may be configured as a heat exchanger that receives a flow of hot flue gas 71 from a blower 67. Other configurations for the heater are also possible. The pressurizer may include a conventional high-pressure pump configured to, for example, pressurize the supply of NH₃ moving through the ammonia supply feed 49. According to an alternative embodiment, the function of the pressurizer and flow controller may be combined via the use of a variable speed pump. Pursuant to conventional systems and methods, a control unit (not shown) may be provided to control the operation of the pressurizer, the heater, and/or the flow controller of the evaporator-mixer component 69.

Referring now to Figure 6, a view is provided of a gas turbine system 10 having an alternative exhaust processing system 14 in accordance with an exemplary embodiment the present invention. In this case, the exhaust processing system 14 includes an injection system 72 that is integrated for the injection of both cooling air and ammonia into the exhaust gas stream 26. Accordingly, the injection system 72 may include injectors 73 positioned within the exhaust duct that fluidly communicate with both a supply of cooling air and a supply of ammonia. The injection system 72, thus, may include a cooling air fan 65 for supplying the cooling air, which may be ambient air, to an injector 73 via a cooling air supply feed 66. According to certain preferred embodiments, the injector 73 includes a configuration similar to that of the air injection tubes 54 described above. As already described, the cooling air fan 65 may be a conventional blower or compressor, and a valve may be included for regulating the flow of cooling air to the injectors 73. The exhaust processing system 14 of Figure 6 may include an SCR system 41 similar to that described above in regard to possible catalyst types and positioning (i.e., the position of the possible catalysts relative to the location at which ammonia enters the exhaust gas stream via injection system 72).

The injector 73 also may fluidly communicate with an ammonia supply feed 49 that delivers NH₃ for injection into the flow through the exhaust duct 29. The ammonia supply feed 49 may connect to an ammonia supply 44, which may include a local storage tank or other source. According to the embodiment shown, the ammonia supply feed 49 may be configured to direct a supply of NH₃ to a junction 74, which represents the location at which the ammonia supply feed 49 is combined with the cooling air supply feed 66. Downstream of the junction 74, the combined flow of cooling air and ammonia is carried by a combined feed 76 to the injector 73. The injector 73, as illustrated, may be disposed within the exhaust duct 29 and include multiple nozzles or injector tubes configured for injecting the combined flow into the exhaust gas stream 26 moving therethrough. Such nozzles or injector tubes may include multiple outlet ports. To promote an even application and mixing, the outlet ports of the nozzle may be spaced about a cross-section of the exhaust duct 29 in an array.

According to further aspects of the present invention and as illustrated in Figure 6, the ammonia supply feed 49 may include an evaporator-mixer component 69. As previously described, the evaporator-mixer component 69 may include a heater, a flow controller, and/or a pressurizer that are configured to promote the proper delivery and mixing of the ammonia upon injection into the exhaust gas stream 26. According to an exemplary embodiment, the flow controller of the evaporator-mixer component 69 may include a valve, such as a solenoid valve, and may variably control the amount of liquid aqueous NH₃ solution flowing to the ammonia injector 42. The heater of the evaporator/mixer component 69, for example, may include any type of conventional heater or heat source, and may be configured to increase the temperature of the aqueous NH₃ moving through the ammonia supply feed 49. According to a preferred embodiment, the heater of the evaporator-mixer component 69, as illustrated, may be configured as a heat exchanger that receives a flow of hot flue gas 71 from a blower 67. Other configurations for the heater are also possible. The pressurizer may include a conventional high-pressure pump configured to, for example, pressurize the supply of NH₃ moving through the Evaporator-Mixer 69. According to an alternative embodiment, the function of the pressurizer and flow controller may be combined via the use of a variable speed pump. Pursuant to conventional systems and methods, a control unit (not shown) may be provided to control the operation of the pressurizer, the heater, and/or the flow controller of the evaporator-mixer component 69. As will be appreciated the evaporator-mixer component 69 may function to evaporate aqueous NH₃ supply from the ammonia source 44 for improved mixing with the cooling air and more uniform distribution in the exhaust gas stream once the combined flow is injected into the exhaust duct 29.

Referring now to Figure 7, an alternative embodiment is shown in which the evaporator-mixer component 69 is replaced with a pump 80 and nozzle 86 for the position mixing of ammonia and cooling air. More specifically, the nozzle 86 is positioned at the junction 84 for injecting a pressurized flow of ammonia supplied to the nozzle 86 via the pump 80. The nozzle 86, as described in more detail below, may be selected for producing droplet size in the injected aqueous ammonia that promotes rapid evaporation into the cooling air. The pump 80 may be any conventional pump suitable for the functionality described herein. The pump 80 may pressurize the ammonia within the ammonia supply feed 49 and deliver the ammonia to the nozzle at an elevated predetermined pressure level. The elevated pressure level may be chosen relative to the desired function, droplet size, and type of nozzle, as should be appreciated by one of ordinary skill in the art. As illustrated, a valve 88 may be provided between the pump 80 and the nozzle 86 for regulating the flow of ammonia to the nozzle 86. The functionality of the pump 80 and the valve 88 may be combined via the use of a variable speed pump.

The nozzle 86, according to preferred variants, may include an atomizing nozzle. More specifically, the nozzle 86 may be configured as an ammonia spray nozzle for superfine atomization. According to exemplary embodiments, the nozzle 86 may be designed for producing an ammonia spray of less than 50 µm mean droplet size. More preferably, the nozzle 86 is designed to achieve an ammonia spray of less than 20 µm mean droplet size. According to a preferred embodiment, the nozzle 86 may include an array of nozzles spaced along a cross-section of the cooling air supply feed 66. In one preferred variant, the nozzle 86 includes one or more so-called spider nozzles that have multiple injecting points spaced about a center axis. According to another variant, the nozzle 86 include one or more high-pressure micro-laminate nozzles, which may include single release point and multiple release point types. Without being bounded by any theory, it is believed that smaller ammonia droplets promote faster evaporation in the cooling air. Accordingly, an exemplary embodiment may include at least one of the following: a reductant supply, a reductant pump for pumping reductant from the reductant tank, a reductant valve for controlling the rate of the reductant flow, and nozzle for injecting fine droplets of the reductant into the flow of cooling air.

Coupled with the design of the air injector cooling as discussed in relation to Figures two and three, the present design may achieve both a highly uniform flow of exhaust gases in terms of temperature and reductant content downstream of the injection point. This improved uniformity, as mentioned already, is advantageous in terms of SCR efficiency, cost-effectiveness, and performance, as well as the reduction of NH₃ slip.

As discussed above, the various techniques set forth herein may provide for the injection of cooling air and reductant into an exhaust gas stream in order to enhance the uniformity of the temperature, velocity distributions, and/or reductant within the exhaust gas stream, while also cooling the exhaust gas stream to enhance the effectiveness of a selective catalyst reduction process. This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An exhaust processing system for treating an exhaust gas stream of a combustion turbine engine, the exhaust processing system comprising:
   an exhaust duct for directing the exhaust gas stream;
   a first catalyst positioned within the exhaust duct for receiving the exhaust gas stream flowing therethrough; and
   an injection system for injecting cooling air and a reductant into the exhaust gas stream, the injection system including:
      a reductant supply feed for supplying the reductant;
      a cooling air supply feed for supplying the cooling air;
      a junction configured at which the reductant supply feed and the cooling air supply feed combine to form a combined supply feed thereafter; and
      an injector disposed within the exhaust duct that connects to the combined supply feed connects.
2. The exhaust processing system of clause 1, wherein the reductant supply feed extends between a reductant supply and the junction;
   wherein the cooling air supply feed extends between a cooling air supply and the junction;
   wherein the combined supply feed is configured to direct a combined flow of the reductant and the cooling air from the junction to the injector;
   wherein the first catalyst comprises a SCR catalyst that is positioned in the exhaust duct at a position that is downstream of the injector; and
   wherein the reductant comprises ammonia.
3. The exhaust processing system of any preceding clause, wherein the exhaust duct extends between a downstream end of the combustion turbine system and a stack through which the exhaust gas stream is emitted to atmosphere;
   wherein the exhaust duct comprises a transition section axially stacked with a downstream section, the transition section being configured to expand a cross-sectional flow area of the exhaust duct in the downstream direction and the downstream section being configured to extend between the transition section and the stack with a substantially constant cross-sectional flow area;
   wherein the injector is disposed in the transition section of the exhaust duct and the first catalyst is disposed in the downstream section of the exhaust duct; and wherein the first catalyst comprises an SCR catalyst positioned downstream of the injector.
4. The exhaust processing system of any preceding clause, wherein the exhaust duct extends between a downstream end of the combustion turbine system and a stack through which the exhaust gas stream is emitted to atmosphere;
   wherein the exhaust duct comprises a transition section axially stacked with a downstream section, the transition section being configured to expand a cross-sectional flow area of the exhaust duct in the downstream direction and the downstream section being configured to extend between the transition section and the stack with a substantially constant cross-sectional flow area;
   wherein the injector is disposed in the downstream section of the exhaust duct and the first catalyst is disposed in the downstream section of the exhaust duct; and wherein the first catalyst comprises an SCR catalyst positioned downstream of the injector.
5. The exhaust processing system of any preceding clause, wherein the junction comprises a position exterior to the exhaust duct; and
   wherein the treating the exhaust gas stream comprises reducing nitrogen oxides.
6. The exhaust processing system of any preceding clause, wherein the injector comprises a plurality of outlets, each of the outlets being positioned within the exhaust duct for injecting therein the combined flow of the reductant and the cooling air; and
   wherein the outlets of the injector are positioned relative to an expected flow of the exhaust gas stream within the exhaust duct so to provide a substantially uniform temperature and reductant distribution within the exhaust gas stream once the exhaust gas stream reaches the first catalyst;
   wherein the combustion turbine engine comprises a gas turbine power plant for producing electricity.
7. The exhaust processing system of any preceding clause, wherein the reductant supply feed comprises a nozzle at the junction, the nozzle being configured for injecting fine particles of the reductant into the cooling air; and
   wherein the fine particles of the injected reductant have less than a 50 µm mean droplet size.
8. The exhaust processing system of any preceding clause, wherein the reductant supply feed comprises a nozzle at the junction, the nozzle being configured for injecting fine particles of the reductant into the cooling air; and
   wherein the fine particles of the injected reductant have less than a 20 µm mean droplet size.
9. The exhaust processing system of any preceding clause, wherein the reductant comprise aqueous ammonia;
   wherein the reductant supply feed comprises a pressurizer and an atomizing nozzle, the atomizing nozzle comprising a position at a downstream end of the reductant supply feed; and
   wherein the injector is located at a sufficient distance upstream of the first catalyst to provide a substantially uniform distribution of temperature and the reductant before the exhaust gas stream reaches the first catalyst.
10. The exhaust processing system of any preceding clause, wherein the pressurizer comprises a high pressure pump configured to deliver the reductant at a predetermined elevated pressure level that corresponds to a desired function of the atomizing nozzle; and
   wherein atomizing nozzle comprises a plurality of outlets spaced over a cross-section of the cooling air supply feed.
11. The exhaust processing system of any preceding clause, wherein the combined supply feed comprises a length defined between the junction and the injector;
   wherein the combined supply feed is configured so that the length corresponds to one over which substantially all of the injected atomized reductant evaporates before reaching the injector; and
   wherein the atomizing nozzle comprises a spider nozzle.
12. The exhaust processing system of any preceding clause, wherein the combined supply feed comprises a length defined between the junction and the injector; and
   wherein the combined supply feed is configured so that the length corresponds to one over which substantially all of the injected atomized reductant evaporates before reaching the injector; and
   wherein the atomizing nozzle comprises a micro-laminate nozzle.
13. The exhaust processing system of any preceding clause, wherein the injector comprises injection tubes having a staggered arrangement in the exhaust duct, wherein each of the injection tubes comprises outlets, and wherein the combined flow of the cooling air and the reductant is injected into the exhaust duct via the outlets.
14. The exhaust processing system of any preceding clause, wherein the outlets are arranged on a downstream-facing side of each of the injection tubes;
   wherein the air injection tube comprise different diameters; and
   wherein the injection tubes are each coupled to at least one common manifold configured to distribute cooling air to each of the injection tubes.
15. The exhaust processing system of any preceding clause, wherein the injection of cooling air mixes with an exhaust stream from a gas turbine engine to improve at least one of temperature uniformity, a velocity uniformity, or a combination thereof, through the exhaust duct.
16. The exhaust processing system of any preceding clause, further comprising a second catalyst positioned within the exhaust duct for receiving the exhaust gas stream flowing therethrough; and
   wherein the second catalyst includes at least one of: a hydrolysis catalyst positioned downstream of the injector, an oxidation catalyst positioned downstream of the injector, and an pre-oxidation catalyst positioned upstream of the injector.
17. The exhaust processing system of any preceding clause, wherein the reductant supply feed comprises an evaporator-mixer component for delivering the reductant to the junction at one of a predetermined temperature and a predetermined pressure.
18. The exhaust processing system of any preceding clause, wherein the reductant comprises aqueous ammonia and the evaporator-mixer comprises a configuration for evaporating the aqueous ammonia for injection into the cooling air in a gaseous state.
19. A method for reducing nitrogen oxides within an exhaust gas stream of a combustion turbine engine, the method comprising:
   directing the exhaust gas stream through an exhaust duct;
   receiving the exhaust gas stream with a SCR catalyst disposed within the exhaust duct;
   directing cooling air through a cooling air supply feed;
   directing reductant through a reductant supply feed;
   combining the cooling air from the cooling air supply feed and the reductant from the reductant supply feed at a junction and directing the combined flow thereof through a combined supply feed to an injector positioned within the exhaust duct; and
   injecting via the injector the cooling air and the reductant of the combined supply feed into the exhaust duct;
   wherein the cooling air comprises a supply sufficient to significantly reduce the temperature of the combustion exhaust gas stream before the combustion exhaust stream is received by the SCR catalyst; and
   wherein the junction is positioned outside of the exhaust duct.
20. The method according to any preceding clause, wherein the cooling air comprises a supply sufficient to reduce the temperature of the combustion exhaust gas stream by at least 20% before the combustion exhaust stream is received by the SCR catalyst;
   wherein the reductant comprises aqueous ammonia;
   further comprising the step of pressurizing the reductant and directing the pressurized reductant through an atomizing nozzle;
   wherein the atomizing nozzle comprises a micro-laminate spider nozzle.

## Claims

1. An exhaust processing system (14) for treating an exhaust gas stream of a combustion turbine engine (12), the exhaust processing system (14) comprising:
an exhaust duct (29) for directing the exhaust gas stream;
a first catalyst (48) positioned within the exhaust duct (29) for receiving the exhaust gas stream flowing therethrough; and
an injection system (72) for injecting cooling air and a reductant into the exhaust gas stream, the injection system (72) including:
a reductant supply feed (49) for supplying the reductant;
a cooling air supply feed (66) for supplying the cooling air;
a junction (74) configured at which the reductant supply feed (49) and the cooling air supply feed (66) combine to form a combined supply feed (76) thereafter; and
an injector (73) disposed within the exhaust duct (29) that connects to the combined supply feed (76) connects.

2. The exhaust processing system (14) of claim 1, wherein the reductant supply feed (49) extends between a reductant supply (44) and the junction (74);
wherein the cooling air supply feed (66) extends between a cooling air supply (66) and the junction (74);
wherein the combined supply feed (76) is configured to direct a combined flow of the reductant and the cooling air from the junction (74) to the injector (73);
wherein the first catalyst (48) comprises a SCR catalyst that is positioned in the exhaust duct (29) at a position that is downstream of the injector (73);
wherein the reductant comprises ammonia;
wherein the junction (74) comprises a position exterior to the exhaust duct (29); and
wherein the treating the exhaust gas stream comprises reducing nitrogen oxides.

3. The exhaust processing system (14) of any preceding claim, wherein the exhaust duct (29) extends between a downstream end of the combustion turbine engine (12) and a stack (50) through which the exhaust gas stream is emitted to atmosphere;
wherein the exhaust duct (29) comprises a transition section (30) axially stacked with a downstream section (31), the transition section (30) being configured to expand a cross-sectional flow area of the exhaust duct (29) in the downstream direction and the downstream section (31) being configured to extend between the transition section (30) and the stack (50) with a substantially constant cross-sectional flow area;
wherein the injector (73) is disposed in one of the transition section (30) of the exhaust duct (29) and the downstream section (31) of the exhaust duct (29);
wherein the first catalyst (48) is disposed in the downstream section (31) of the exhaust duct (29); and
wherein the first catalyst (48) comprises an SCR catalyst positioned downstream of the injector (73).

4. The exhaust processing system (14) of any preceding claim, wherein the injector (73) comprises a plurality of outlets, each of the outlets being positioned within the exhaust duct (29) for injecting therein the combined flow of the reductant and the cooling air;
wherein the outlets of the injector (73) are positioned relative to an expected flow of the exhaust gas stream within the exhaust duct (29) so to provide a substantially uniform temperature and reductant distribution within the exhaust gas stream once the exhaust gas stream reaches the first catalyst (48); and
wherein the combustion turbine engine (12) comprises a gas turbine power plant for producing electricity.

5. The exhaust processing system (14) of any preceding claim, wherein the reductant supply feed (49) comprises a nozzle (86) at the junction (74), the nozzle (86) being configured for injecting fine particles of the reductant into the cooling air; and
wherein the fine particles of the injected reductant have less than a 20 µm mean droplet size.

6. The exhaust processing system (14) of any preceding claim, wherein the reductant comprise aqueous ammonia;
wherein the reductant supply feed (49) comprises a pressurizer and an atomizing nozzle (86), the atomizing nozzle comprising a position at a downstream end of the reductant supply feed (49); and
wherein the injector (73) is located at a sufficient distance upstream of the first catalyst (48) to provide a substantially uniform distribution of temperature and the reductant before the exhaust gas stream reaches the first catalyst (48).

7. The exhaust processing system (14) of claim 6, wherein the pressurizer comprises a high pressure pump 80 configured to deliver the reductant at a predetermined elevated pressure level that corresponds to a desired function of the atomizing nozzle;
wherein atomizing nozzle (86) comprises a plurality of outlets spaced over a cross-section of the cooling air supply feed (66);
wherein the combined supply feed (76) comprises a length defined between the junction (74) and the injector (73);
wherein the combined supply feed (76) is configured so that the length corresponds to one over which substantially all of the injected atomized reductant evaporates before reaching the injector (73); and
wherein the atomizing nozzle (86) comprises a spider nozzle.

8. The exhaust processing system (14) of claim 6 or claim 7, wherein the pressurizer comprises a high pressure pump (80) configured to deliver the reductant at a predetermined elevated pressure level that corresponds to a desired function of the atomizing nozzle (86);
wherein atomizing nozzle (86) comprises a plurality of outlets spaced over a cross-section of the cooling air supply feed (66);
wherein the combined supply feed (76) comprises a length defined between the junction (74) and the injector (73);
wherein the combined supply feed (76) is configured so that the length corresponds to one over which substantially all of the injected atomized reductant evaporates before reaching the injector (73); and
wherein the atomizing nozzle (86) comprises a micro-laminate nozzle.

9. The exhaust processing system (14) of any preceding claim, further comprising a second catalyst (46) positioned within the exhaust duct (29) for receiving the exhaust gas stream flowing therethrough, wherein the second catalyst (46) includes at least one of: a hydrolysis catalyst positioned downstream of the injector (73), an oxidation catalyst positioned downstream of the injector (73), and a pre-oxidation catalyst positioned upstream of the injector (73);
wherein the reductant supply feed (49) comprises an evaporator-mixer component (69) for delivering the reductant to the junction (74) at one of a predetermined temperature and a predetermined pressure; and
wherein the reductant comprises aqueous ammonia and the evaporator-mixer component (69) comprises a configuration for evaporating the aqueous ammonia for injection into the cooling air in a gaseous state.

10. A method for reducing nitrogen oxides within an exhaust gas stream of a combustion turbine engine, the method comprising:
directing the exhaust gas stream through an exhaust duct (29);
receiving the exhaust gas stream with a SCR catalyst disposed within the exhaust duct (29);
directing cooling air through a cooling air supply feed (66);
directing reductant through a reductant supply feed (49);
pressurizing the reductant within the reductant supply feed (49) and directing the pressurized reductant through an atomizing nozzle positioned at a junction (74);
combining the cooling air from the cooling air supply feed (66) and the reductant from the reductant supply feed (49) at the junction (74) and directing the combined flow thereof through a combined supply feed (76) to an injector (73) positioned within the exhaust duct (29);
injecting via the injector (73) the cooling air and the reductant of the combined supply feed (76) into the exhaust duct (29);
wherein the cooling air comprises a supply sufficient to reduce the temperature of the combustion exhaust gas stream by at least 20% before the combustion exhaust stream is received by the SCR catalyst;
wherein the junction (74) is positioned outside of the exhaust duct (29); and
wherein the reductant comprises aqueous ammonia.
